# EUROPEAN PATENT APPLICATION

(11) **EP 0 649 111 A1**
(43) Date of publication of application: **19.04.1995**
(21) Application number: 94202138.7
(22) Date of filing: 22.07.1994
(51) Int. Cl.: G06K 7/10, G08B 13/24

(54) **Noise reduction in identification system**

(30) Priority: 23.07.1993 NL 9301299
(71) Applicant: N.V. Nederlandsche Apparatenfabriek NEDAP, NL-7141 DE Groenlo (NL)
(72) Inventor: Stekelenburg, J. C., NL-7141 DE Groenlo (NL)
(74) Representative: Smulders, Theodorus A.H.J., Ir.

(57) **Abstract**

The invention relates to a system comprising a transmitter unit for generating an electromagnetic interrogation field, at least one responder which modulates the interrogation field with a code when it is located in the interrogation field, and a detection unit for detecting the interrogation field modulated by the responder. The transmitter and/or detection unit comprise means for suppressing at least a part of the interference signals, generated by the transmitter unit, which comprise at least one frequency component located within the frequency spectrum of a sideband of the modulated interrogation field. Thus the signal to noise ratio in the detection unit is improved.

## Description

The invention relates to a system comprising a transmitter unit for generating an electromagnetic interrogation field, at least one responder which modulates the interrogation field with a code when it is located in the interrogation field, and a detection unit for detecting the interrogation field modulated by the responder. Such a system is disclosed in, for instance, Dutch Patent No. 176,404.

In identification systems such as described in this Dutch patent, an electronic circuit is used which is made up of a transmitter and a receiver functioning as a detection unit. Using an antenna, the transmitter in this system produces a magnetic alternating field which can optionally serve as a source of energy for the responder arranged at some distance. The responder is an electronic circuit comprising a resonant circuit tuned to the frequency of the alternating field and a control circuit which damps this circuit, controlled by a digital code. The electrical resonant circuit supplies sufficient energy to provide the control circuit with electrical energy.

Using the damping circuit, the responder is capable of controlling the absorption of energy from the magnetic field, so that the energy release of the transmitter is remotely influenced. If the distance between transmitter and responder is relatively great, however, the above-mentioned influence will be very small, so that mutilation of the code through interfering signals from the environment of the identification system becomes more and more likely.

Those intefering signals can be divided in two groups. Group 1 is formed by interfering signals which are caused by external sources, such as for instance radio transmitters. Group 2 consists of signals which are inevitably generated in the identification system itself, in particular in the transmitter circuit.

Now, the object of the invention is to remove the drawbacks of the signals from group 2.

As mentioned hereinabove, the responder transfers the digital information by damping the magnetic field, for instance, and two conditions are possible here:
1. strong damping, as a result of a virtually unloaded resonant circuit;
2. no damping, as a result of a short-circuited resonant circuit.

Now, if the two situations alternate at a fast rate, a rapidly alternating energy release of the transmitter will arise, with a rapidly alternating variation of the amplitude of the electromagnetic field. Accordingly, the electromagnetic field is modulated. Such an amplitude modulation is characterized in the frequency spectrum by sidebands located on opposite sides of the transmitting frequency (fundamental frequency) in which the code referred to is included. If the transmitter itself did not cause any modulation, the digital code could be reconstructed from the modulation again with a receiver circuit. It has been found, however, that a modulation-free transmitter is not feasible, so that a great distance between the transmitter antenna and the responder gives rise to an objectionable mixed form of the modulation of the transmitter, also referred to as noise, and the modulation coming from the responder, which constitutes a limitation of the maximum recognition distance between the transmitter and the responder.

The object of the invention is to meet these drawbacks and its characteristic feature is that the transmitter and/or detection unit comprises means for suppressing at least a part of the interference signals, generated by the transmitter unit, which comprise at least one frequency component located within the frequency spectrum of a sideband of the modulated interrogation field.

Because precisely interference signals with frequency components falling within the sidebands are suppressed, the sidebands can be better detected, without the possible occurrence of confusion with these interference signals. Thus the signal to noise ratio of detected sidebands is improved.

According to a particular embodiment of the invention, the interference signals referred to are suppressed in the interrogation field radiated by the transmitter unit. This means that at the transmitter end measures have been taken to improve the signal to noise ratio referred to.

According to an alternative embodiment, the interference signals are suppressed in the modulated interrogation field received by the detection unit. This means that at the detection or receiver end of the system, measures are taken to improve the signal to noise ratio. In particular, the measures at the transmitter and receiver end can also be used in combination.

According to an advantageous embodiment of the invention, the transmitter unit comprises a narrow band filter which at least suppresses frequency components in the generated interrogation field which are located within the frequency spectrum of a sideband of the modulated interrogation field.

According to an alternative embodiment of the system, the detection unit comprises a difference former to which a received signal representing the received modulated interrogation field and a transmitted signal representing the radiated interrogation field are applied to obtain a difference signal which is further processed in the detection unit to obtain the code. Because the transmitted signal comprises the interference signals referred to, while the same applies to the received modulated interrogation field, the interference signals will at least partly have been suppressed in the difference signal. In particular, the detection unit comprises a receiving antenna and an input circuit, connected with the receiving antenna, which separates the received modulated interrogation field from the carrier of the interrogation field for the purpose of obtaining the received signal. The signals applied to the difference former are then demodulated signals.

In order to obtain optimum suppression of interference signals in the difference signal, the detection unit preferably comprises a frequency correction filter which simulates the frequency-dependent characteristic of the receiving antenna for the purpose of obtaining the transmitted signal. This can for instance be realized by providing the detection unit with a dummy antenna which receives the interrogation field radiated by the transmitter unit in order to obtain the transmitted signal. More particularly, the detection unit to that end comprises an input circuit, connected with the dummy antenna, which separates the received interrogation field from the carrier of the interrogation field in order to obtain the transmitted signal. In that case, both the transmitted signal and the received signal are demodulated signals which are applied to the difference former.

According to an alternative embodiment for obtaining the transmitted signal, the detection unit comprises a low-pass filter to which at least a part of the signal applied to the transmitter antenna is applied to obtain the transmitted signal. Thus a dummy antenna can be dispensed with. The low-pass filter thus simulates the properties of the receiving antenna. In this connection, the detection unit may comprise an input circuit, connected with the transmitter unit, to which at least a part of the signal applied to the transmitting antenna is applied, the input circuit providing a signal separated from the carrier to the low-pass filter in order to obtain the transmitted signal.

US Patent 3,798,642 discloses a system in which a wide-band filter is included between the transmitting antenna and the transmitter. The system involved, however, is a system in which the responders generate harmonic signals when they are located in the interrogation field. The present invention, however, relates to a system in which the responders modulate the radiated interrogation field, the sidebands of the modulated field being located precisely around the fundamental frequency of the interrogation field and not necessarily around a harmonic of the fundamental frequency. Accordingly, the carrier is not modulated. On the other hand, the radiated harmonics may possibly be modulated. In the system according to the invention, however, the carrier of the interrogation field is modulated by a responder. Accordingly, in the system according to US Patent 3,798,642, the relevant sidebands generally do not comprise any frequency components of the above-mentioned interference signals.

US Patent 4,063,229 also describes a system whose responders radiate a signal with harmonics of the received fundamental frequency. However, the carrier of the interrogation field is not modulated.

US Patent 4,546,241 describes a system whose responders upon reception of the interrogation field radiate a signal with entirely different secondary frequencies than the fundamental frequency of the interrogation field. The secondary frequencies are divisors of the fundamental frequency. Only the secondary frequencies are modulated with a code, whereas in accordance with the system of the invention the carrier of the interrogation field is modulated with the code.

The invention will be further explained hereinafter with reference to the drawing. In the drawing:
Fig. 1 is a graph of the frequency spectrum of a received signal;
Fig. 2 shows the frequency characteristic of a filter which can be used in an embodiment of a system according to the invention;
Fig. 3 shows the frequency spectrum of a signal received and further processed by a detection unit of a system according to the invention;
Fig. 4 shows a first embodiment of a transmitter unit of a system according to the invention;
Fig. 5 shows a second embodiment of a transmitter unit of a system according to the invention;
Fig. 6 shows a first embodiment of a system according to the invention;
Fig. 7 shows a second embodiment of a system according to the invention; and
Fig. 8 shows a third embodiment of a system according to the invention.

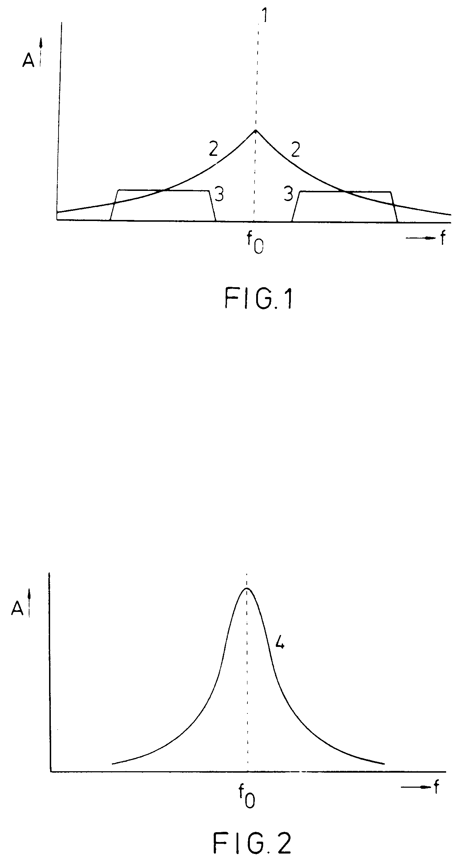

Fig. 1 depicts the frequency spectrum of a carrier 1 with the associated noise bands 2, symmetrically present to the left and the right thereof. An interrogation field with the carrier 1 has been radiated by a transmitter unit. A responder which is located in the interrogation field will modulate the interrogation field with a code. A detection unit will further process the modulated interrogation field upon reception, for the purpose, among others, of recovering the code radiated by the responder. The sidebands 3 which have been caused by the received responder code are located symmetrically around the fundamental frequency. An important detail is that as a result of the chosen modulation, these sidebands sit at some distance from the carrier. This property is used in one embodiment of the system according to the invention. In this embodiment the signal to be radiated is passed through a filter with a frequency characteristic 4 as indicated in Fig. 2.

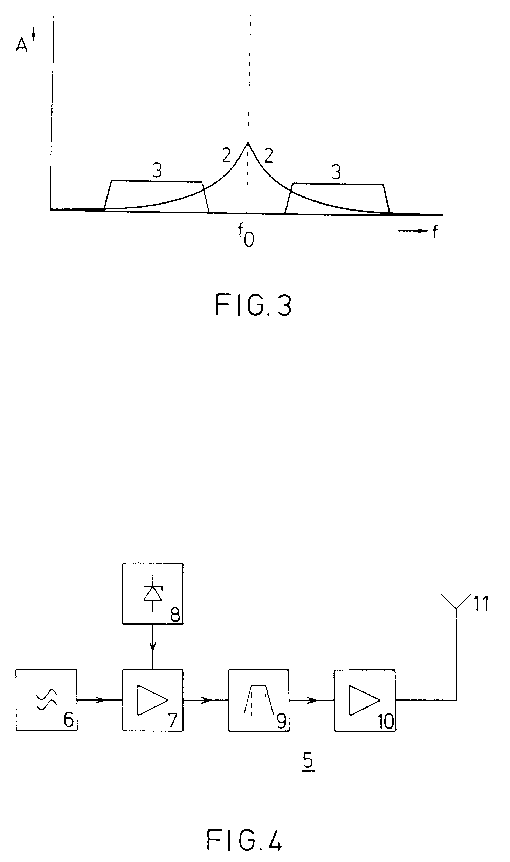

The effect of this on the received signals according to Fig. 1 is shown in Fig. 3. Because the noise sidebands have been partly suppressed, the ratio between data (sidebands with code) and noise has been improved in favour of the data, in this case even to the extent where the data is now clearly stronger than the noise. It will be clear that as a result the sensitivity of the system has increased.

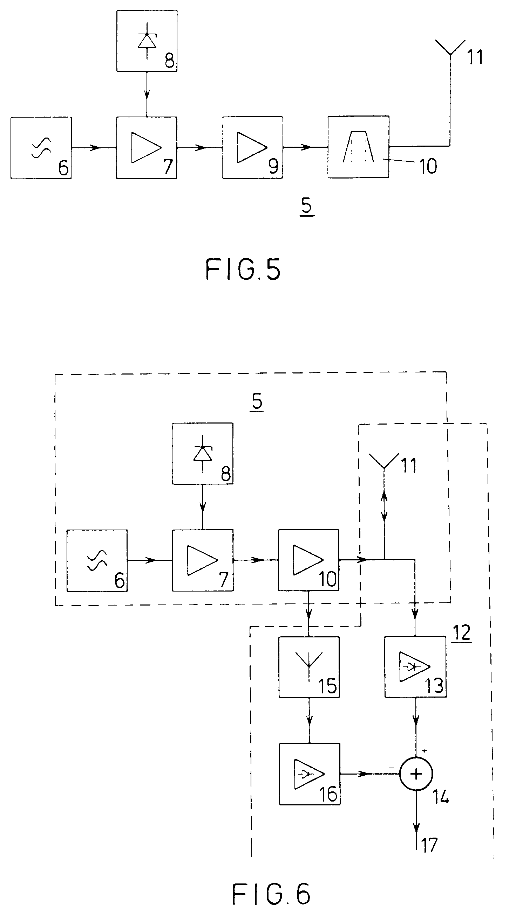

The manner in which this result can be achieved in a possible embodiment of the system is shown in Figs. 4 and 5.

Fig. 4 shows the transmitter unit 5 including the oscillator 6, which generates an oscillator frequency. This signal is applied to a buffer stage 7, whose function, among others, is to provide the signal with a constant amplitude, for which a low-noise reference 8 is required. The signal produced by the buffer stage will inevitably comprise noise bands, as shown in Fig. 1. In the circuit, the signal with noise bands is subsequently applied to a filter 9 with a pass characteristic as shown in Fig. 2. The result of this operation is applied to an output amplifier 10 having such properties that it adds only a minor measure of new noise to the oscillator signal before the amplified oscillator signal is applied to the antenna 11. Because the noise has been suppressed by the filter, an interrogation signal modulated by a responder will upon reception comprise a frequency spectrum as shown in Fig. 3.

A circuit which moreover suppresses the noise from the output amplifier 10 is shown in Fig. 5. Entirely analogously to Fig. 4, Fig. 5 shows a transmitter device with an oscillator 6, a buffer stage 7, a reference 8 and an output amplifier 10. The filter 9 with the characteristic of Fig. 2, however, has been arranged between the output amplifier and antenna 11, so that the output amplifier noise is suppressed as well. It is noted that Figs. 4 and 5 only show the transmitter unit 5 of the system. The detection unit 12 for receiving the modulated interrogation field and recovering the code therefrom can be of a generally known type or of a type as shown in Figs. 6-8.

Because in a (passive) filter as discussed with reference to Figs. 4 and 5 a small part of the desired signal is always lost as well, in those situations where such is not allowable, a way of suppressing noise as shown in Fig. 6 can be opted for. Here, at the input of a detection unit 12 a circuit is included which separates the combination of transmitter noise and responder data.

Fig. 6 again shows the transmitter unit 5 including the oscillator 6, the buffer stage 7, the reference 8 and the output amplifier 10. In this example, the transmitter unit 5 does not contain a filter 9, so that the output amplifier 10 is connected directly with the antenna 11. In this circuit the total amount of transmitter noise produced mixes with the received code and is applied to the input circuit 13 of detection unit 12. In this example the detection unit 12 further comprises a dummy antenna 15, a second input circuit 16 and a difference former 14. The part of the detection unit for obtaining the code is known per se and not shown in the drawing. Further, in this example the transmitter unit 5 and the receiver unit 12 comprise a common antenna. In the input circuit 13 the received signal is separated from the carrier using, for instance, a rectifier and subsequently amplified and filtered to obtain a received signal. Before the received signal is processed further, it traverses a difference former 14 to which a transmitted signal is applied, coming from the dummy antenna 15 and the second input circuit 16. The dummy antenna carries only a small part of the available antenna current and has no magnetic coupling with the responder. This can for instance be realized by shielding the dummy antenna in such a manner that it is sensitive only to signals coming from the direction of antenna 11. Accordingly, the second input circuit 16 exclusively provides transmitter noise in the form of the transmitted signal. In the difference circuit the transmitted signal (transmitter noise) is added in opposite phase to the received signal (sum signal of the responder code and the transmitter noise which is supplied through the coupled antenna 11). The result of this is a difference signal 17 for further processing to obtain the code and which has been largely stripped of transmitter noise. For the sake of completeness, it is noted that it is also possible to provide the transmitter unit 5 and the detection unit 12 each with a separate antenna. In that case the detection unit will also receive the noise emitted by the transmitter unit 5. However, no transmitter noise - as in the present example - will be applied directly from the transmitter unit 5 to the detection unit 12.

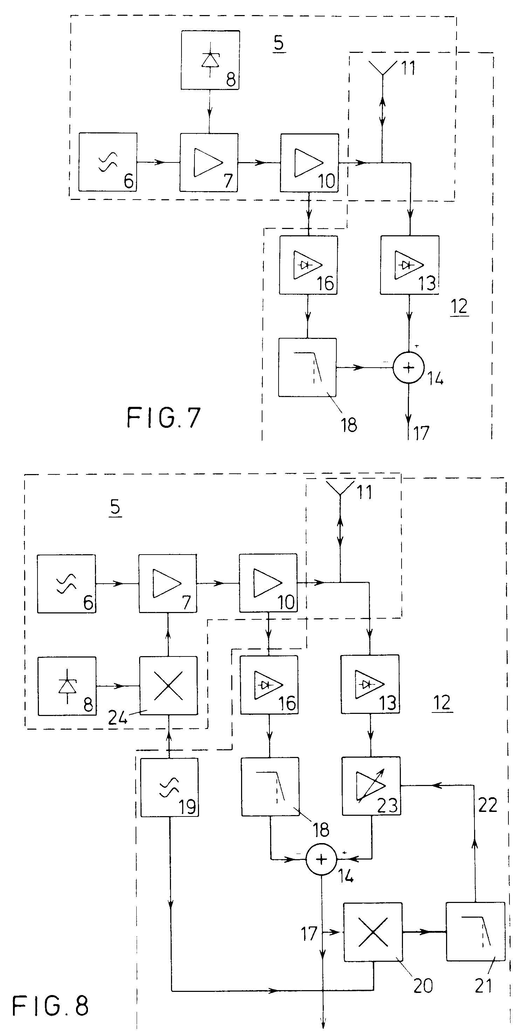

A variant of the above circuit is shown in Fig. 7 and utilizes no dummy antenna. In this example the second input circuit 16 is connected directly with the output of the output amplifier 10 of the transmitter unit 5. The absence of the dummy antenna circuit 15, with a band-pass antenna characteristic, can upon passage of the rectifier present in the second input circuit 9 be compensated by the low-pass filter 18. The output signal of the low-pass filter 18 is at least substantially equal to that of the second input circuit 16 in Fig. 6. Thus the same result is obtained in both circuits according to Figs. 6 and 7 after traversal of the difference former 14.

The last two methods as depicted in Figs. 6 and 7 utilize a difference former 14 in which the interference signals are subtracted from each other. The properties of the antenna may change by numerous causes, in particular when it is part of a portable identification system. Now, if in the transmitter unit 5 one or more interference signals are deliberately added to the oscillator signal, a circuit as shown in Fig. 8 enables an automatic fine-adjustment of the difference former. In this connection, the interference signals are chosen such that they are located in the frequency spectrum just outside the range where the code information is located. This is important because a small part of the interference signals is always transmitted to detection unit 12 anyhow. Through this choice of the interference signals, this part is removed in the detection unit 12 using filters. The control system can be applied to the circuits of Figs. 6 and 7.

Fig. 8 shows the circuit of Fig. 7 with the above-described control system added to it. The signal coming from the reference 8 is applied to a modulator 24 which modulates the reference signal with f-interference 19. The result of this is applied to the buffer stage 7, whereafter the same path is traversed as in Fig. 7. The signal f-interference 19 is multiplied in the receiver by the result 17 of the difference former 14 in a multiplier 20. The multiplier 20 provides upon filtration 21 an error signal 22 with which the signal of the rectifier in the input circuit 13 or of the rectifier in the input circuit 18 is varied in amplitude with an amplifier 23 whose amplification is of controllable design. In the example of Fig. 8, control of the signal from the rectifier of the input circuit 13 has been chosen. The control loop stabilizes at a difference signal 17 in which the signal f-interference is (substantially) no longer present. In this situation the influence of the transmitter noise is minimal and the error signal 22 attains a zero level.

## Claims

1. A system comprising a transmitter unit for generating an electromagnetic interrogation field, at least one responder which modulates the interrogation field with a code when it is located in the interrogation field, and a detection unit for detecting the interrogation field modulated by the responder, characterized in that the transmitter and/or detection unit comprise means for suppressing at least a part of the interference signals, generated by the transmitter unit, which comprise at least one frequency component located within the frequency spectrum of a sideband of the modulated interrogation field.

2. A system according to claim 1, characterized in that said interference signals are suppressed in the interrogation field radiated by the transmitter unit.

3. A system according to claim 1 or 2, characterized in that said interference signals are suppressed in the modulated interrogation field received by the detection unit.

4. A system according to any one of the preceding claims, characterized in that the interrogation field has a predetermined fundamental frequency f0, with the sidebands of the modulated interrogation field being located on opposite sides of the frequency f0.

5. A system according to claim 2, characterized in that the transmitter unit comprises a narrow-band filter which at least suppresses frequency components in the generated interrogation field which are located within the frequency spectrum of a sideband of the modulated interrogation field.

6. A system according to claim 5, characterized in that the transmitter unit comprises an oscillator with which an oscillator signal of a predetermined fundamental frequency is generated, an output amplifier with which the oscillator signal is amplified and an antenna to which the amplified oscillator signal is applied for radiating the interrogation field, the narrow-band filter being included between the output amplifier and the antenna.

7. A system according to claim 5, characterized in that the transmitter unit comprises an oscillator with which an oscillator signal of a predetermined fundamental frequency is generated, an output amplifier with which the oscillator signal is amplified and an antenna to which the amplified oscillator signal is applied for radiating the interrogation field, the narrow-band filter being included between the oscillator and the output amplifier.

8. A system according to claim 6 or 7, characterized in that the narrow-band filter has a band-pass frequency which corresponds with the predetermined fundamental frequency.

9. A system according to claim 3, characterized in that the detection unit comprises a difference former to which a received signal representing the received modulated interrogation field and a transmitted signal representing the radiated interrogation field are applied to obtain a difference signal which is further processed in the detection unit to obtain the code.

10. A system according to claim 9, characterized in that the detection unit comprises a receiving antenna and an input circuit, connected with the receiving antenna, which separates the received modulated interrogation field from the carrier of the interrogation field in order to obtain the received signal.

11. A system according to claim 9 or 10, characterized in that the detection unit comprises a frequency correction filter which simulates the frequency-dependent characteristic of the receiving antenna in order to obtain the transmitted signal.

12. A system according to claim 11, characterized in that the detection unit comprises a dummy antenna which receives the interrogation field radiated by the transmitter unit.

13. A system according to claim 12, characterized in that the detection unit comprises an input circuit, connected with the dummy antenna, which separates the received interrogation field from the carrier of the interrogation field and provides said transmitted signal.

14. A system according to claim 11, characterized in that the detection unit comprises a low-pass filter to which at least a part of the signal applied to the transmitting antenna is applied.

15. A system according to claim 14, characterized in that the detection unit comprises an input circuit, connected with the transmitter unit, to which at least a part of the signal applied to the transmitting antenna is applied, the input circuit providing a signal separated from the carrier to the low-pass filter in order to obtain the transmitted signal.

16. A system according to any one of the preceding claims 9-15, characterized in that the transmitter unit comprises means for providing the radiated interrogation field with a predetermined interference signal, the detection unit comprises means which generate an error signal by comparing the difference signal with the predetermined interference signal, the detection unit further comprising a controllable amplifier which controls the amplitude of the received signal applied to the difference former on the basis of the error signal, in such a manner that the contribution of the interference signal in the difference signal is minimized.

17. A system according to any one of the preceding claims, characterized in that the transmitter unit and the detection unit comprise a common antenna.

18. A system according to any one of the preceding claims, characterized in that the system is suitable for identifying responders and/or communicating with responders.

19. A transmitter and detection unit suitable for use in a system according to any one of the preceding claims.
